# EUROPÄISCHE PATENTSCHRIFT

(11) **EP 1 559 985 B1**
(45) Veröffentlichungstag und Bekanntmachung des Hinweises auf die Patenterteilung: **06.02.2008**
(21) Anmeldenummer: 04024131.7
(22) Anmeldetag: 09.10.2004
(51) Int. Cl.: F41H 11/16, G05D 1/02

(54) **Anordnung von einem ersten und mindestens einem weiteren Fahrzeug in einem lose koppelbaren nicht spurgebundenen Zugverband**
Assembly of a first and at least one further vehicle in a loosely connectable non track-bounding train
Ensemble d'un prémier et au moins encore un véhicule dans une liaison ratachable de façon lâche et permettant leur déplacement latérale

(30) Priorität: 20.01.2004 DE 102004003055
(43) Veröffentlichungstag der Anmeldung: 03.08.2005
(73) Patentinhaber: Rheinmetall Landsysteme GmbH, 24107 Kiel (DE)
(72) Erfinder: Grosch, Hermann, Dr., 29336 Nienhagen (DE)
(74) Vertreter: Dietrich, Barbara

(56) Entgegenhaltungen:
- EP-A- 1 004 845
- EP-A- 1 388 724
- DE-A1- 10 109 052
- FR-A- 2 707 755
- US-A1- 2002 165 649

## Beschreibung

In aktuellen militärischen Szenarien werden Fahrzeuge und ihre Besatzungen mit einer vielfältigen Bedrohung konfrontiert. Fahrzeuge werden sowohl mit direkt richtenden Waffen, wie Handwaffen, Maschinenkanonen, Panzerwaffen, Lenkraketen usw. als auch mit Artillerie und Mörserwaffen bekämpft. Eine besondere Bedrohung stellen Minen und Sprengfallen dar, die zu jeder Zeit und an jedem Ort erwartet werden müssen und die nur sehr schwer aufgeklärt werden können. Um die Fahrzeuge und ihre Besatzungen gegen diese Bedrohung zu schützen, werden unterschiedliche Maßnahmen und technische Einrichtungen angewendet.

Eine elementare Maßnahme besteht in Schutzmaßnahmen für die Fahrzeuge selbst. Die Architektur der Fahrzeuge sowie ein passiver Grundschutz stellen sicher, dass die Aufklärbarkeit der Fahrzeuge erschwert und die Wirkung von Treffern auf das Fahrzeug und seine Besatzung reduziert wird. Aktive Schutzsysteme zur Reduzierung der Aufklärbarkeit, z.B. alle Arten von Nebel (DE 199 36 054 A1), und Munitionswirkung, z.B. Reaktivpanzerung (DE 44 40 120 C2), stehen zur Ergänzung dieses Grundschutzes zur Verfügung. Insbesondere gegen letztgenannte Schutzform sind Flugkörper bekannt, die diese Panzerung durchdringen können (DE 198 06 066 A1).

Bei der aktuellen Qualität der Bedrohung kann somit mit der verfügbaren Technologie der Schutz für Fahrzeuge und ihre Besatzungen nicht immer ausreichend gewährleistet werden.

Ein Beispiel für diese Art der Bedrohung sind Sprengfallen, die am Straßenrand eingebaut werden und in ihrer einfachsten Form aus einer großen Menge Sprengstoff bestehen. Bei Vorbeifahrt eines Fahrzeuges werden sie manuell über Fernzündung oder automatisch über einen fahrzeugerkennenden Zündmechanismus (DE 198 27 377 A1) ausgelöst.

Autonome Fahrzeuge ohne Besatzung haben das Ziel, den Einsatz von Personal in solchen Bedrohungsszenarien zu vermeiden. Nachteilig ist, dass solche Fahrzeuge mit einer für militärische Einsätze ausreichenden Qualität an Autonomie mit verfügbarer Technologie nicht hinreichend realisierbar ist.

Ferngesteuerte Fahrzeuge, die bereits heute z.B. bei der Kampfmittelräumung eingesetzt werden (DE 102 15 220A1, DE 196 14 391 A1), weisen häufig den Nachteil auf, dass ihre Handhabung umständlich und aufwendig ist und ihr Einsatz in Situationen, die keine so hohe Bedrohung bedeuten, nicht sinnvoll ist.

Die FR 2 707 755 A1 offenbart einen geführten Fahrzeugverbund, bei dem als Kommunikation eine am dem ersten Fahrzeug folgenden Fahrzeug angebrachte Kamera dient. Angedacht ist, dass die Fahrzeuge die Reihenfolge als solches ändern können, wobei dann die Kamera im folgenden Fahrzeug zu installieren ist.

Die vorliegende Erfindung stellt sich daher die Aufgabe, ein Fahrzeugsystem aufzuzeigen, das sowohl bemannt als auch unbemannt eingesetzt werden kann und somit die Überlebensfähigkeit der Besatzung eines Landfahrzeuges in exponierten Gefährdungssituationen entscheidend verbessert.

Die Grundidee der Erfindung besteht darin, Fahrzeuge in der Kombination eines bemannten Master-Fahrzeugs und eines unbemannten Slave-Fahrzeugs einzusetzen, wobei die Reihenfolge, das Master-Fahrzeug vor oder hinter dem Slave-Fahrzeug anzuordnen wahlweise erfolgen kann, so dass vorteilhaft von außen nicht erkennbar ist, welches der Fahrzeuge das Master- und welches das Slave-Fahrzeug ist. Es können speziell auf diese Fähigkeiten ausgelegte Fahrzeuge realisiert werden. Beide Fahrzeugarten (Master, Slave) können ohne Funktionseinschränkung unbemannt aber auch bemannt eingesetzt werden. Die technische Ausstattung eines Fahrzeugs kann zudem so ausgeführt werden, dass es wahlweise als Master-Fahrzeug oder als Slave-Fahrzeug eingesetzt werden kann.

Grundsätzlich können Fahrzeuge mit einer Master- und/oder Slave-Fähigkeit wie ein konventionelles Fahrzeug bemannt gefahren werden. Die Ausstattung des Fahrzeuges für eine Master- und/oder Slave-Fähigkeit bedeutet keinerlei Einschränkung in der Fahrzeugnutzung. Diese Betriebsart kann gewählt werden, wenn das Fahrzeug in Szenarien ohne besondere Bedrohung eingesetzt wird.

In der Kombination eines Master- Fahrzeuges und eines Slave-Fahrzeuges wird das Master-Fahrzeug bemannt und das Slave-Fahrzeug unbemannt gefahren. Dabei ist das Slave-Fahrzeug über eine berührungslos wirkende elektronische Deichsel (dieses Prinzip ist aus der DE 197 43 024 A1 bekannt) mit dem Master-Fahrzeug verbunden. Das Slave-Fahrzeug wird hinter dem bemannten Master-Fahrzeug eingesetzt und folgt den Fahrzeugbewegungen des Master-Fahrzeuges automatisch in einem vorwählbaren Abstand. Diese Betriebsart wird bevorzugt dann gewählt, wenn sich Fahrzeuge in Einsatzräume mit erhöhter Bedrohung bewegen.

Wird das unbemannte Slave-Fahrzeug vor dem bemannten Master-Fahrzeug eingesetzt, steuert der Bediener das Slave-Fahrzeug über dessen wenigstens eine Fahrkamera. Hier ist das Master- Fahrzeug ist über eine elektronische Deichsel an das Slave-Fahrzeug gekoppelt und folgt dessen Fahrzeugbewegungen in einem vorwählbaren Abstand. Diese Betriebsart wird bevorzugt dann gewählt, wenn Fahrzeuge in Szenen mit akuter Minenbedrohung eingesetzt werden müssen. Der Vorteil hierbei besteht darin, dass das vorausfahrende Slave-Fahrzeug einen Schutzschild für das Master-Fahrzeug gegen Minen und Waffenwirkung von vorne darstellt. Auch hier wird durch die elektronische Deichsel nur ein Fahrer für beide Fahrzeuge benötigt.

Im Fall einer besonders gravierenden Bedrohung, z.B. beim Einfahren in eine Ortschaft, kann das Slave-Fahrzeug von der elektronischen Deichsel abgekoppelt werden, wie es bereits die DE 197 43 024 A1 vorschlägt, wobei in der DE 197 43 024 A1 dann eine manuelle Weiterfahrt durch den Fahrer im abgekoppelten Fahrzeug erfolgt. Dagegen kann die Besatzung des hier vorgeschlagenen Master-Fahrzeuges das Slave-Fahrzeug über Kameras und Fernsteuerung weiter fernsteuern. Mittels Assistenzsystemen, z.B. für die Straßen- und Hinderniserkennung, kann der Bediener von der manuellen Fahrsteuerung des Slave-Fahrzeuges weitgehend entlastet werden. Das Slave-Fahrzeug kann dann wieder über die elektronische Deichsel gefahren werden (vorlaufend oder folgend), wenn es wieder in Abstand und Orientierung zum Master-Fahrzeug positioniert ist. Diese Positionierung kann über Fernsteuerung oder aber auch automatisch erfolgen. Damit kann das Slave-Fahrzeug durch das Master-Fahrzeug über größere Distanzen auch ohne direkte Sichtverbindung ferngesteuert werden. Auch diese Fernsteuerung erfolgt durch den Fahrer über seinen Bedienstand im Master-Fahrzeug. Eine Umschaltung der Bedieneinheit auf das Master-Fahrzeug, wenn dieses seine Stellung verlassen muß, kann zu jedem Zeitpunkt verzugslos erfolgen.

Aus der DE 101 09 052 A1 ist bekannt, dass mindestens in einem ersten und einem letzten Fahrzeug in einem lose gekoppelten Zugverband das letzte Fahrzeug des Zugverbandes eine Anzeigevorrichtung aufweist und mindestens das erste und das letzte Fahrzeug eine Vorrichtung zur Fahrzeug/ Fahrzeug - Kommunikation umfassen. Als Fahrzeug / Fahrzeug-Kommunikationseinrichtung werden Funk-, Laser- oder Infrarotsende- und - Empfangsanlagen vorgeschlagen.

Durch die vorliegende Erfindung werden die Vorteile eines unbemannten Fahrzeugs kombiniert mit den Fähigkeiten des Menschen, ein Fahrzeug situationsgerecht einzusetzen. Das Prinzip der elektronischen Deichsel wird so genutzt, dass das unbemannte Slave-Fahrzeug wahlweise vor oder hinter dem bemannten Master-Fahrzeug fahren kann. Wird das Slave-Fahrzeug hinter dem Master Fahrzeug - quasi im Anhängerbetrieb - eingesetzt, besteht für die Besatzung des Master-Fahrzeuges keinerlei Einschränkung der Sicht nach vorne. Wird das Slave-Fahrzeug vor dem Master Fahrzeug eingesetzt, kann der Bediener die Szenen vor dem Slave-Fahrzeug beispielsweise über Kamerabilder auf seinen Monitoren wahrnehmen.

Es können auch vorhandene konventionelle Fahrzeuge über eine Zusatzausstattung mit der Fähigkeit eines Master- oder eines Slave-Fahrzeuges versehen werden. Ein so ausgerüstetes Fahrzeug kann immer wahlfrei wie ein konventionelles Fahrzeug eingesetzt werden. Die Erfindung ist somit nicht nur auf Minensuch- und Räumsystemen beschränkt, sondern auch bei anderen Fahrzeugen anwendbar.

Anhand von Ausführungsbeispielen soll die Erfindung näher erläutert werden. Es zeigt:
- Fig. 1: skizzenhaft ein Master- Fahrzeuges,
- Fig. 2: skizzenhaft ein Slave- Fahrzeug,

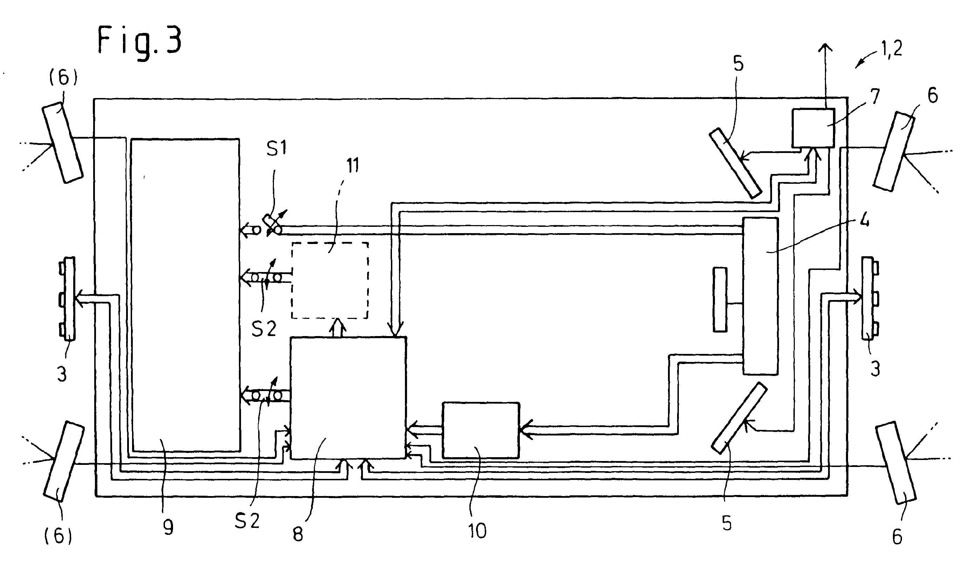

- Fig. 3: skizzenhaft ein kombiniertes Master- /Slave - Fahrzeug,

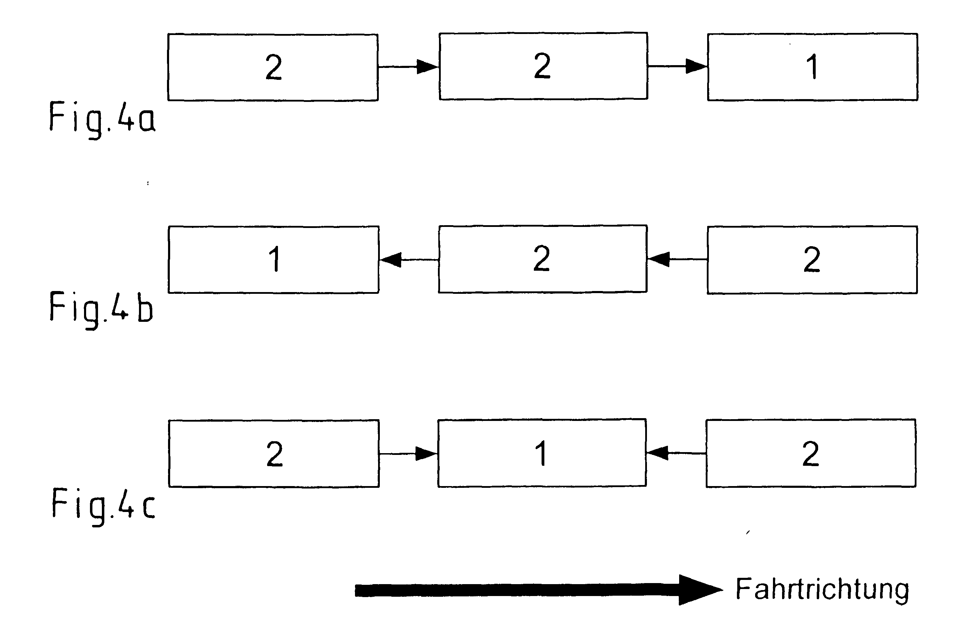

- Fig. 4: Kombinationsmöglichkeiten der Fahrzeugverknüpfungen.

Das hier beschriebene System besteht aus wenigstens 2 Fahrzeugen, von denen wenigstens eines über die Fähigkeit eines Master-Fahrzeuges 1 und ein weiteres über die Fähigkeit eines Slave-Fahrzeuges 2 verfügen sollte.

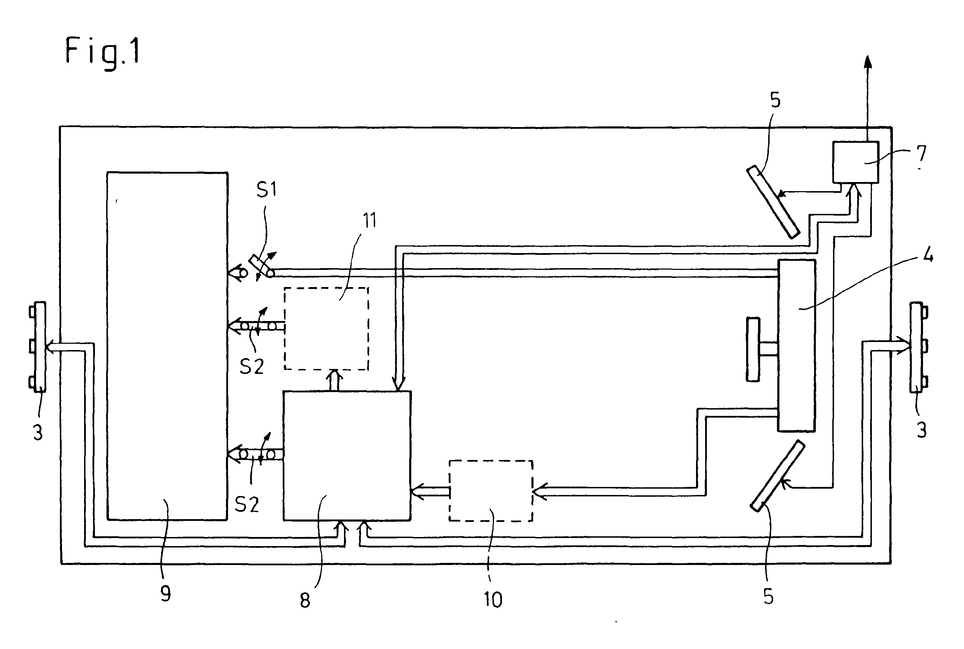

Fig. 1 zeigt die wesentlichen Funktionselemente, die dem Fahrzeug 1 die Fähigkeit eines Master-Fahrzeuges verleihen.
Vorzugsweise vorne und hinten am Fahrzeug 1 sind Einrichtungen für eine elektronische Deichsel 3, wie Abstandsmesser etc., montiert. Ein Bedienstand 4 mit nicht näher dargestellten Bedienelementen des Master- Fahrzeuges 1 verfügt über wenigstens einen Monitor 5. Mit diesem elektronisch verbunden ist ein Übertragungsmodul 7 als Fahrzeug/ Fahrzeug Kommunikation, welches mit einem Rechner 8 funktional in elektrischen Kontakt steht. Mit 9 gekennzeichnet ist ein Antriebs- und Lenksystem, welches über die nicht näher dargestellten Bedienelemente, wie Gas, Bremse, Lenkung etc. gesteuert wird.

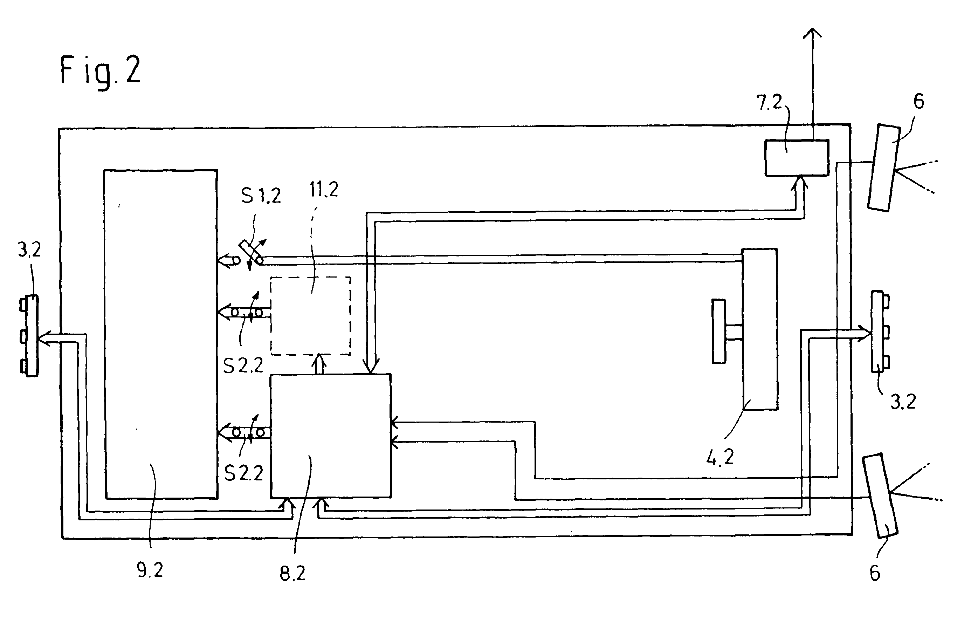

Fig. 2 gibt die wesentlichen Funktionselemente wieder, die dem Fahrzeug 2 die Fähigkeit eines Slave- Fahrzeuges verleihen. Seine Ausrüstung entspricht weitgehend der Ausstattung des Master-Fahrzeuges 1, weshalb den benannten Bezugszeichen ein ".2" angehängt wurde. Die Unterschiede bestehen darin, dass das Slave-Fahrzeug 2 über wenigstens ein Fahrkamera 6 verfügt, deren Bilder über den Rechner 8.2 und das Übertragungsmodul 7.2 an das Master-Fahrzeug 1 übertragen werden. Monitore für den Bediener entfallen in der Regel.

Zusätzlich kann die Datenerfassung von Aktionen eines Bedieners am Bedienstand 4.2 entfallen.

Damit ist das Fahrzeug 1 in der Lage, ein Fahrzeug, hier ein Slave-Fahrzeug 2 , das über eine komplementäre Einrichtung der elektronischen Deichsel 3 verfügt, vorausfahrend oder folgend zu führen. Auf dem Monitor 5 werden die Bilder der wenigstens einen Fahrkamera 6 des Slave-Fahrzeuges 2 für einen nicht näher dargestellten Bediener im Master - Fahrzeug 1 dargestellt, wenn das Slave-Fahrzeug 2 über die elektronische Deichsel 3 gekoppelt oder im ferngesteuerten Betrieb räumlich unabhängig vom Master-Fahrzeug 1 eingesetzt wird.
Die Bilddaten der Fahrkameras 6 des Slave-Fahrzeuges 2 werden über das Übertragungsmodul 7 empfangen. Dieses Übertragungsmodul 7 kann integraler Bestandteil der elektronischen Deichsel 3 sein, wenn die Fahrzeuge 1, 2 über die elektronische Deichsel 3 gekoppelt eingesetzt werden. Im ferngesteuerten Betrieb bei größeren Distanzen zwischen Master- und Slave-Fahrzeug 1, 2 können hierfür für auch Lichtwellenleiter, Funk oder Laser eingesetzt werden.

Prinzipiell ist vorgesehen, dass der Bediener sein Antriebs- und Lenksystem 9 im Master-Fahrzeug 1 über die Bedienelemente (Gas, Bremse, Lenkung usw.) des Bedienstandes 4 im Fahrzeug 1 steuert. Im Fall der Nachführung des Slave -Fahrzeugs 2 ist ein Schalter S1 geschlossen und ein Schalter S2 offen. Die Aktionen des Bedieners am Bedienstand 4 des Fahrzeuges 1 können zusätzlich durch den Zentralrechner 8 erfasst werden. Bei Fahrzeugen mit drive by wire Steuerung liegen diese Daten in der Regel schon digital vor. Bei Fahrzeugen ohne drive by wire Technologie müssen die Aktionen des Bedieners an den Bedienelementen durch entsprechende Sensoren 10 erfasst und an den Rechner 8 übertragen werden. Das Antriebs- und Lenksystem 9 des Fahrzeuges 1 kann wahlweise anstatt durch den Bediener auch durch den Rechner 8 gesteuert werden. In diesem Fall wirken nicht die Bedienelemente des Bedienstandes 4 auf das Antriebs- und Lenksystem 9 ein, sondern der Rechner 8, wozu der Schalter S1 offen und der Schalter S2 geschlossen ist. Bei einem drive by wire System kann diese Steuerung direkt erfolgen. Handelt es sich um ein konventionelles Antriebs- und Lenksystem 9 , müssen die Steuer- und Lenkkommandos über eine geeignete Aktorik 11 auf das Antriebs- und Lenksystem 9 einwirken. Der Datenaustausch der Steuerungs- und Zustandsdaten mit dem Slave-Fahrzeug 2 erfolgt vom Zentralrechner 8 über das Übertragungsmodul 7. In diesem "Anhängerbetrieb" wird das Master-Fahrzeug 1 durch seinen Bediener so gesteuert, dass er über seine Bedieneinheit das Antriebs- und Lenksystem 9 seines Fahrzeugs 1 steuert (S1 geschlossen, S2 offen). Das Slave-Fahrzeug 2 (Rechner 8.2) errechnet aus den Daten der elektronischen Deichsel 3 die Fahrbewegung des Master-Fahrzeuges 1 und folgt ihm automatisch.

Wird das Slave-Fahrzeug 2 dem Master-Fahrzeug 1 vorausfahrend eingesetzt, steuert der Bediener vom Master-Fahrzeug 1 aus über seinen Bedienstand 4 das Slave-Fahrzeug 2 über dessen Fahrkameras 6. Die Bilder der Fahrkameras 6 des Slave-Fahrzeuges 2 werden auf den Monitoren 5 des Master-Fahrzeuges 1 dargestellt. Die Aktionen des Fahrers am Bedienstand 4 werden über den Zentralrechner 8 und das Übertragungsmodul 7 direkt zum Slave-Fahrzeug 2 übertragen und bewirken dort die Steuerung des Antriebs- und Lenksystems 9.2. Das Antriebs- und Lenksystem 9 des Master-Fahrzeuges 1 wird vom Bediener abgekoppelt und über den Rechner 8 gesteuert (S1 offen, S2 geschlossen). Dazu erfasst dieser über die elektronische Deichsel 3 Abstand, Geschwindigkeit und Orientierung zum Slave-Fahrzeug 2. Mit diesen Daten werden die Steuerdaten für das Antriebs- und Lenksystem 9 des Master-Fahrzeuges 1 so berechnet, dass es dem Slave-Fahrzeug 2 im vorgegebenen Abstand spurgenau folgt.

Das Fahrzeug 2 kann grundsätzlich auch konventionell gefahren werden. In dieser Betriebsart werden die Funktionen des Rechners 8, der Sensorik 10, der Aktorik 11 der elektronischen Deichsel 3 des Übertragungsmoduls 7 und der Monitore 5 nicht benötigt.

Die Fahrzeuge können grundsätzlich auch so konfiguriert werden, dass sie frei wählbar als Master 1 oder als Slave 2 eingesetzt werden können (Bild 3). Ein Vorteil einer solchen Konfiguration besteht darin, dass von außen nicht erkennbar ist, welches der beiden Fahrzeuge bemannt gefahren wird und ob das Slave-Fahrzeug 2 vorausfährt oder folgt.

Grundsätzlich ist es auch möglich, mehrere Fahrzeuge als Slave-Fahrzeuge 2 mit nur einem Master-Fahrzeug 1 einzusetzen, sowohl vorausfahrend, folgend oder im Mix, d.h. ein Teil der Slave-Fahrzeuge 2 fährt hinter dem Master-Fahrzeug 1, ein Teil vor dem Master-Fahrzeug 1 (Bild 4a,b,c). Auch in diesen Fällen wäre nicht erkennbar, an welcher Position sich das bemannte Master-Fahrzeug 1 befindet.

### Bezugszeichen

- 1: Master - Fahrzeug
- 2: Slave - Fahrzeug
- 3 (3.2): Elektronische Deichsel
- 4 (4.2): Bedienstand Fahrzeug 1 (2)
- 5: Monitor für Fahrkamera
- 6: Kamera
- 7 (7.2): Datenübertragungseinrichtung / Übertragungsmodul
- 8 (8.2): Zentralrechner
- 9 (9.2): Antriebs- und Lenksystem
- 10: Sensorik (für Bedienelemente)
- 11 (11.2): Aktorik für Antriebs- und Lenksystem

## Patentansprüche

1. Anordnung von einem ersten (1) und mindestens einem weiteren Fahrzeug (2) in einem lose koppelbaren nicht spurgebundenen Zugverband, mit Mitteln (3, 7) zur Kopplung und Fahrzeug / Fahrzeug - Kommunikation, zumindest aufweisend je ein Antriebs- und Lenksystem (9, 9.2) mit notwendiger Aktorik (11, 11.2), auf die Bedienelemente des jeweils anderen Fahrzeuges (1, 2) einwirken können, wobei das weitere Fahrzeug (2) als Slave- Fahrzeug, welches bemannt sein kann, vom ersten Fahrzeug (1) als Master - Fahrzeug fernbedienbar wahlweise entweder vorausfahrend oder folgend geführt und mit diesem bewegt wird, wozu das geführte Fahrzeug (2) wenigstens eine Kamera (6) am Fahrzeug (2) und das führende Fahrzeug (1) wenigsten einen Monitor (5) aufweist, die miteinander funktional über die Fahrzeug / Fahrzeug - Kommunikation (7) verbunden sind und das Antriebs- und Lenksystem (9.2) des geführten Fahrzeuges (2) über die Bedienelemente des führenden Fahrzeuges (1) bedienbar ist.

2. Anordnung nach Anspruch 1, **dadurch gekennzeichnet, dass** die Bilddaten der Fahrkameras (6) des geführten Fahrzeuges (1, 2) über ein Übertragungsmodul (7) als Fahrzeug/ Fahrzeug- Kommunikation empfangen werden.

3. Anordnung nach Anspruch 1, **dadurch gekennzeichnet, dass** als Kopplung (3) eine elektronische Deichsel verwendet wird.

4. Anordnung nach Anspruch 2 oder 3, **dadurch gekennzeichnet, dass** das Übertragungsmodul (7) integraler Bestandteil der elektronischen Deichsel (3) sein kann.

5. Anordnung nach Anspruch 1, **dadurch gekennzeichnet, dass** bei größeren Distanzen zur Kopplung zwischen führendem und geführten Fahrzeug (1, 2) Lichtwellenleiter, Funk oder Laser eingesetzt werden.

6. Anordnung nach einem der Ansprüche 1 bis 5, **dadurch gekennzeichnet, dass** ein Zentralrechner (8.2) und im geführten Fahrzeug (2) zur Steuerung dessen Antriebs- und Lenksystems (9.2) eingebunden ist.

7. Anordnung nach einem der Ansprüche 1 bis 6, **dadurch gekennzeichnet, dass** das Antriebs- und Lenksystem (9) des führenden Fahrzeugs (1) über einen Zentralrechner (8) im führenden Fahrzeug (1) gesteuert werden kann.

8. Anordnung nach einem der Ansprüche 1 bis 7, **dadurch gekennzeichnet, dass** die Fahrzeuge (1, 2) so konfiguriert sind, dass es frei wählbar als führendes (1) oder als geführtes Fahrzeug (2) eingesetzt werden kann.

9. Anordnung nach einem der vorgenannten Ansprüche zum Einsatz bei Minensuch- und Räumfahrzeugen.

10. Anordnung nach einem der vorgenannten Ansprüche 1 bis 9, **dadurch gekennzeichnet, dass** ein Assistenzsystem zur Erfassung für Straßen- und Hindernisse zumindest im geführten Fahrzeug (2) eingebunden ist.

11. Verfahren zum Führen von einem ersten (1) und mindestens einem weiteren Fahrzeug (2) in einem lose koppelbaren nicht spurgebundenen Zugverband, zumindest aufweisend je ein Antriebs- und Lenksystem (9, 9.2) mit notwendiger Aktorik (11, 11.2), auf die Bedienelemente des jeweils anderen Fahrzeuges (1, 2) einwirken können, **dadurch gekennzeichnet, dass** das weitere Fahrzeug (2) als Slave-Fahrzeug vom ersten Fahrzeug (1) als Master-Fahrzeug fernbedienbar wahlweise entweder vorausfahrend oder folgend geführt und mit diesem bewegt wird, wozu das Antriebs- und Lenksystem (9.2) des geführten Fahrzeuges (2) über die Bedienelemente des führenden Fahrzeuges (1) bedienbar ist.

12. Verfahren nach Anspruch 11, **dadurch gekennzeichnet, dass** das Antriebs- und Lenksystem (9, 9.2) des führenden Fahrzeuges (1) wahlweise anstatt durch einen Bediener durch einen Rechner (8, 8.2) gesteuert werden kann.

13. Verfahren nach Anspruch 11 oder 12, **dadurch gekennzeichnet, dass** mehrere Fahrzeuge als Slave-Fahrzeuge (2) mit nur einem Master-Fahrzeug (1) einsetzbar sind, sowohl vorausfahrend, folgend oder im Mix, wobei ein Teil der Slave-Fahrzeuge (2) hinter und ein Teil vor dem Master-Fahrzeug (1) fährt.

## Claims

1. Arrangement of a first (1) and at least one further vehicle (2) in a loosely coupled non rail-mounted train set, with means (3, 7) for coupling and for vehicle/vehicle communication, with each having at least one propulsion and guidance system (9, 9.2) with the necessary actuator systems (11, 11.2) on which control elements of the respective other vehicle (1,2) can act, wherein the further vehicle (2), as a slave vehicle that can be manned, can be remotely controlled from the first vehicle (1) as a master vehicle, with the slave vehicle optionally leading or following and being moved with the master vehicle, with the guided vehicle (2) having at least one camera (6) on the vehicle (2) and the guiding vehicle (1) having at least one monitor (5), with the camera (6) and monitor (5) being functionally connected to each other through the vehicle/vehicle communication (7) and the propulsion and guidance system (9.2) of the guided vehicle (2) being controllable by the control elements of the guiding vehicle (1).

2. Arrangement according to Claim 1, **characterized in that** the image data of the navigation camera (6) of the guided vehicle (1, 2) is received via a transmission module (7) as vehicle/vehicle communication.

3. Arrangement according to Claim 1, **characterized in that** an electronic drawbar is used as the coupling (3).

4. Arrangement according to Claim 2 or 3, **characterized in that** the transmission module (7) can be an integral component of the electronic drawbar (3).

5. Arrangement according to Claim 1, **characterized in that**, when the distance are great, optical fibres, radio or laser are used for coupling the guiding and guided vehicles (1, 2).

6. Arrangement according to one of Claims 1 to 5, **characterized in that** a central computer (8.2) is linked to the guided vehicle (2) for controlling the propulsion and guidance system (9.2) of said guided vehicle (2).

7. Arrangement according to one of Claims 1 to 6, **characterized in that** the propulsion and guidance system (9) of the guiding vehicle (1) can be controlled via a central computer (8) in the guiding vehicle (1).

8. Arrangement according to one of Claims 1 to 7, **characterized in that** the vehicles (1, 2) are configured so that they can be used optionally as the guiding (1) or guided (2) vehicle.

9. Arrangement according to one of the preceding claims for use with mine searching and clearing vehicles.

10. Arrangement according to one of the preceding Claims 1 to 9, **characterized in that** an assistance system for detecting road and obstacles is connected at least to the guided vehicle (2).

11. Method for guiding a first (1) and at least one further vehicle (2) in a loosely coupled non rail-mounted train set, each having at least one propulsion and guidance system (9, 9.2) with the necessary actuator systems (11, 11.2) on which control elements of the respective other vehicle (1, 2) can act, **characterized in that** the further vehicle (2), as a slave vehicle, can be remotely controlled from the first vehicle (1) as a master vehicle, with the slave vehicle optionally leading or following and being moved with the master vehicle, with the propulsion and guidance system (9.2) of the guided vehicle (2) being controllable by the control elements of the guiding vehicle (1).

12. Method according to Claim 11, **characterized in that** the propulsion and guidance system (9, 9.2) of the guiding vehicle (1) can be optionally controlled by a computer (8, 8.2) instead of by an operator.

13. Method according to Claim 11 or 12, **characterized in that** several vehicles as slave vehicles (2) can be used with only one master vehicle (1), either leading or following or in a mix, with one part of the slave vehicle (2) moving behind the master vehicle (1) and one part moving in front of the master vehicle (1).

## Revendications

1. Disposition d'un premier véhicule (1) et d'au moins un autre véhicule (2) en une formation de train non liée à une voie et pouvant être couplée lâchement, comprenant des moyens (3,7) de couplage et de communication de véhicule à véhicule, présentant chacun au moins un système d'entraînement et de direction (9, 9.2) avec l'actorique nécessaire (11, 11.2) sur lesquels des éléments de commande de chaque autre véhicule (1,2) peuvent agir, disposition dans laquelle l'autre véhicule (2) est guidé à distance au choix soit en roulant devant soit en suivant comme véhicule esclave qui peut être habité, par le premier véhicule (1) comme maître et avance avec ce dernier, à quelles fins le véhicule guidé (2) présente au moins une caméra (6) sur le véhicule (2) et le véhicule guide (1) présente au moins un écran (5), ladite caméra et ledit écran étant connectés l'un à l'autre fonctionnellement par l'intermédiaire de la communication de véhicule à véhicule (7), et le système d'entraînement et de direction (9.2) du véhicule guidé (2) peut être commandé par l'intermédiaire des éléments de commande du véhicule guide (1).

2. Disposition selon la revendication 1, **caractérisée en ce que** les données d'image de la caméra d'avancement (6) du véhicule guidé (1,2) sont reçues via un module de transmission (7) en tant que communication de véhicule à véhicule.

3. Disposition selon la revendication 1, **caractérisée en ce qu'**un timon électronique est utilisé comme couplage (3).

4. Disposition selon la revendication 2 ou 3, **caractérisée en ce que** le module de transmission (7) peut être un constituant intégral du timon électronique (3).

5. Disposition selon la revendication 1, **caractérisée en ce qu'**en cas de plus grandes distances des guides d'onde, une radio ou un laser sont utilisés afin coupler le véhicule guide au véhicule guidé (1,2).

6. Disposition selon l'une quelconque des revendications 1 à 5, **caractérisée en ce qu'**un ordinateur central (8.2) est intégré dans le véhicule guidé (2) pour commander son système d'entraînement et de direction (9.2).

7. Disposition selon l'une quelconque des revendications 1 à 6, **caractérisée en ce que** le système d'entraînement et de direction (9) du véhicule guide (1) peut être commandé via un ordinateur central (8) dans le véhicule guide (1).

8. Disposition selon l'une quelconque des revendications 1 à 7, **caractérisée en ce que** les véhicules (1,2) sont configurés de sorte à pouvoir être utilisés facultativement comme véhicule guide (1) ou véhicule guidé (2).

9. Disposition selon l'une quelconque des revendications précédentes, destinée à être utilisée dans le cas de véhicules de recherche et d'enlèvement de mines.

10. Disposition selon l'une quelconque des revendications précédentes 1 à 9, **caractérisée en ce qu'**un système d'assistance destiné à saisir les rues et les obstacles est intégré au moins dans le véhicule guidé (2).

11. Procédé de guidage d'un premier véhicule (1) et d'au moins un autre véhicule (2) en une formation de train non liée à une voie et pouvant être couplée lâchement, comprenant des moyens (3,7) de couplage et de communication de véhicule à véhicule, présentant chacun au moins un système d'entraînement et de direction (9, 9.2) avec l'actorique nécessaire (11, 11.2) sur lesquels des éléments de commande de chaque autre véhicule (1,2) peuvent agir, **caractérisé en ce que** l'autre véhicule (2) est guidé à distance au choix soit en roulant devant soit en suivant comme véhicule esclave qui peut être habité, par le premier véhicule (1) comme maître et avance avec ce dernier, à quelles fins le système d'entraînement et de direction (9.2) du véhicule guidé (2) peut être commandé par l'intermédiaire des éléments de commande du véhicule (1) guide.

12. Procédé selon la revendication 11, **caractérisé en ce que** le système d'entraînement et de direction (9, 9.2) du véhicule guide (1) peut être commandé au choix par un ordinateur (8, 8.2) au lieu d'un opérateur.

13. Procédé selon la revendication 11 ou 12, **caractérisé en ce que** plusieurs véhicules peuvent être utilisés comme véhicules esclaves (2) avec seulement un véhicule maître (1) soit en roulant devant soit en suivant soit en utilisation mixte où une partie des véhicules esclaves (2) roule derrière le véhicule maître (1) et l'autre partie roule devant lui.
